# EUROPEAN PATENT SPECIFICATION

(11) **EP 1 156 540 B1**
(45) Date of publication and mention of the grant of the patent: **01.12.2004**
(21) Application number: 01304201.5
(22) Date of filing: 10.05.2001
(51) Int. Cl.: H01M 2/12

(54) **Battery vent plug**
Batterieentgasungsstopfen
Bouchon à évent pour batterie

(30) Priority: 19.05.2000 GB 0012031
(43) Date of publication of application: 21.11.2001
(73) Proprietor: Yuasa Automotive Batteries (Europe) Ltd., Birmingham B11 3DA (GB)
(72) Inventor: Woods, Brynn, Tamworth, Staffordshire B77 5TA (GB)
(74) Representative: Carpenter, David

(56) References cited:
- PATENT ABSTRACTS OF JAPAN vol. 012, no. 101 (E-595), 2 April 1988 (1988-04-02) & JP 62 232853 A (MATSUSHITA ELECTRIC IND CO LTD), 13 October 1987 (1987-10-13)

## Description

The present invention relates to a vent plug for use in an electric storage battery.

Primarily, but not exclusively, the vent plug is intended for use in a lead-acid battery for use in a vehicle, such batteries often being referred to as SLI batteries (starting, lighting and ignition batteries), and while the invention is not specifically limited to such lead acid batteries it will be described herein for convenience in relation to such batteries.

It is recognised that in some forms of battery, including SLI batteries, certain operating conditions of the battery can give rise to the evolution, within each cell of the battery, of gases with entrained electrolyte droplets. Mechanical agitation of the battery, and rapid charging or over-charging of the battery are two recognised causes of the evolution of gases with entrained electrolyte droplets.

While it is necessary for gases evolved during the operation of the battery to vent from the cells of the battery to atmosphere it is extremely undesirable for electrolyte droplets to be discharged into the atmosphere and usually batteries have, in their gas vent path, a baffle arrangement which intercepts, and thus promotes coalescence, of electrolyte droplets which are then returned into the appropriate cell of the battery. Gases can pass through the baffle arrangement and normally the vent path includes a porous disc which acts as a flame trap so that in the event that the issuing gases are ignited at the exterior of the battery then the flame cannot travel back into the cells of the battery.

Conventionally the lid of a battery case closes each cell of the battery and the lid has an aperture for filling each battery cell with electrolyte. During normal use the apertures in the lid are closed by individual plugs and it has previously been proposed to use these plugs as a vent route for gases, and to incorporate a baffle arrangement within the gas flow path through the vent plug so that electrolyte droplets are intercepted by the baffle arrangement and returned to their respective cell.

It is known to produce a vent plug by separately moulding a hollow body and a baffle assembly, the baffle assembly being inserted into the hollow body and being retained in place by a snap-fit connection with the body. Such a vent plug arrangement is disadvantageous in that it requires moulding of two separate components and subsequent handling and assembly of those components to complete the vent plug before it can be used in a battery. It is an object of the present invention to provide a vent plug for a battery in a simple and convenient form wherein the aforementioned disadvantage is minimised.

In accordance with the present invention there is provided a battery vent plug comprising a generally cylindrical component for introduction through the lid of a battery in use, the cylindrical component being open at its opposite axial ends so as to provide a path for gas to flow therethrough from the interior of the battery to atmosphere, and, a baffle arrangement within said cylindrical component, said cylindrical component including a region moulded as two semi-cylindrical elements united along one axially extending edge by an integral flexible hinge, said elements including mating latch components for holding the elements in a closed position relative to one another defining said region of said cylindrical component and, said baffle arrangement being moulded integrally with said region of said cylindrical component so as to define a labyrinthine gas flow path through said region when said elements are latched together to define said region.

Preferably said baffle arrangement is defined by a plurality of inclined baffle plates moulded integrally with one of said elements and engaging the inner surface of the other element when the two elements are closed together.

Desirably said cylindrical component includes a region into which a flame retarder disc can be introduced prior to closing said elements to define said cylindrical region, said disc lying in said gas flow path downstream of said baffle arrangement in use.

Conveniently the mating longitudinal edges of said elements remote from said hinge are shaped to overlap in the closed position of said elements to provide a low-pressure gas tight seal.

Desirably said elements include latch component at their hinge edges and at their edges remote from the hinge so that both abutting edges of the two elements are latched in position when the two elements are closed against one another.

Preferably the end region of said component which is the downstream end region of the component in use is moulded in one piece, and has an integral, external screw thread for affixing the vent plug to the lid of the battery casing in use.

Desirably said mating latch components include an enlarged aperture providing a gas entry to said baffle arrangement in use.

Conveniently one or both of said elements includes aperture means above the lowermost edge of the lowermost baffle plate to permit coalesced electrolyte to drain back into the associated battery cell in use.

An example of the invention is illustrated in the accompanying drawings wherein:
Figure 1 is a side elevational view of a battery vent plug;
Figure 2 is an axial end view of the plug of Figure 1, to a reduced scale, and illustrating two elements of the plug in an open position;
Figure 3 is a cross sectional view on the line A - A in Figure 2;
Figure 4 is a sectional view on the line B - B in Figure 2;
Figure 5 is a side elevational view in the direction of arrow X in Figure 2;
Figure 6 is a cross-sectional view on the line C - C in Figure 2, to an enlarged scale;
Figure 7 is a view similar to Figure 6 but showing elements thereof in a closed position;
Figure 8 is a side elevational view in a direction of arrow Y in Figure 2;
Figure 9 is a view similar to Figure 3 of a modification;
Figure 10 is a view similar to Figure 6 of the modification shown in Figure 9, and
Figure 11 is a diagrammatic perspective view of the vent plug of Figure 10 but with components thereof omitted for clarity.

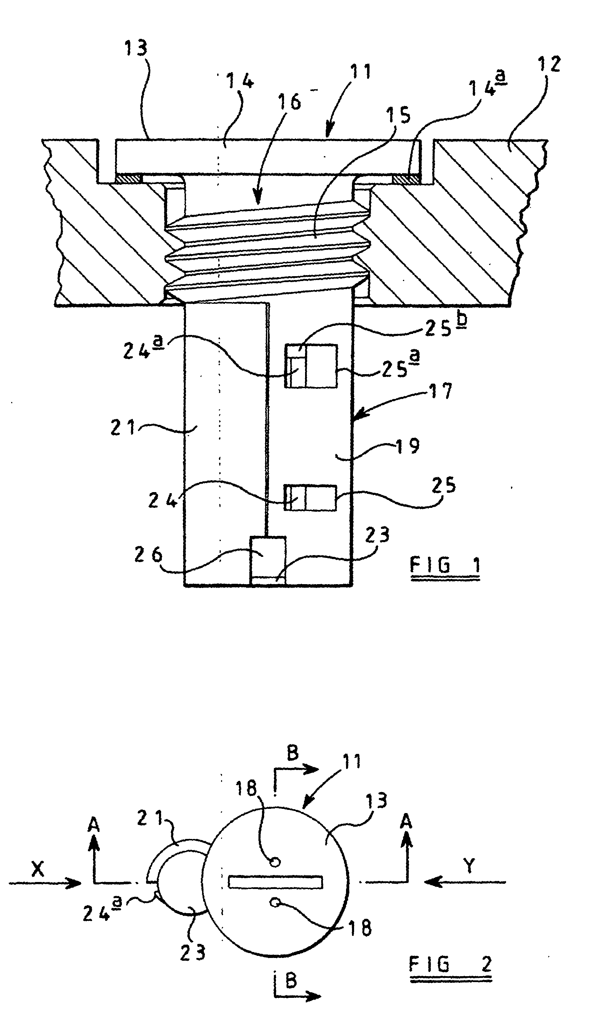

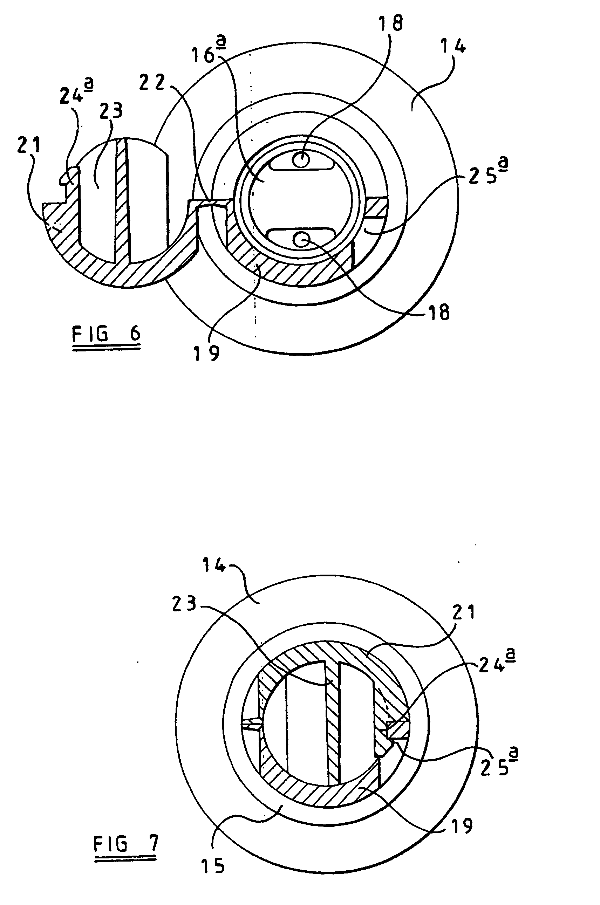

Referring first to Figures 1 to 8 of the accompanying drawings the vent plug 11 is arranged to be a screw fit in an aperture in the lid 12 of a battery casing so that an outer surface 13 of the plug is substantially flush with the outer surface of the lid 12, and the remainder of the plug 11 projects through the lid 12 and into the gas space above the electrolyte level in the cell of the battery with which the plug is associated. An outer peripheral flange 14 of the plug 11 traps an annular sealing ring 14a against the surface of the lid 12 to seal the interface of the plug and the lid so that the only gas flow path from the cell of the battery to atmosphere is through the interior of the plug 11.

The plug 11 is moulded as a single component in a synthetic resin material, conveniently polypropylene.

Generally the plug is an elongate hollow cylindrical component comprising a first region 16 formed externally with the integral screw threads 15 and a second, axially divided region 17. The region 16 is of one part construction, and is hollow and closed at its outer end by an end wall 16a which is extended radially outward to define the flange 14. The end wall 16 is perforated by two or more small diameter apertures 18.

The region 17 is formed as two semi-cylindrical elements 19, 21 which are united along one axially extending edge by an integral flexible web 22 defining an integral hinge between the elements 19, 21. The element 19 is a continuation of the region 16 of the plug and has a smooth internal cylindrical surface 19a. The lower end of the region 17 lies just below the normal electrolyte level of its respective cell in use.

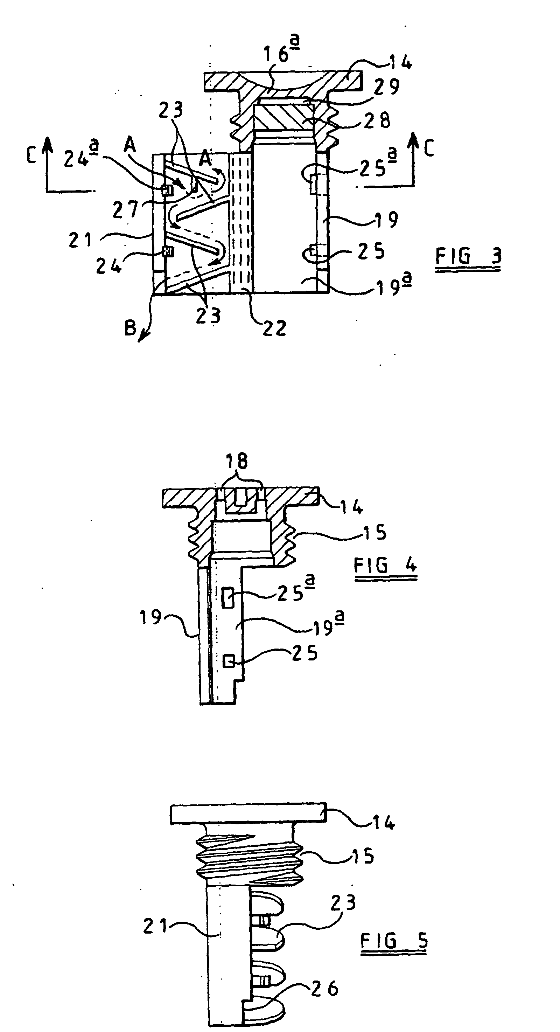

A plurality of inclined baffle plates 23 are moulded integrally with the element 21 and protrude from the inner cylindrical surface of the element 21 to protrude laterally from the open face of the element. The arrangement of the baffle plates 23 is such that when the element 21 is hinged from the position shown in Figures 2, and 3, by flexure of the web 22, so that the axially extending edges of the element 21 abut with the corresponding edges of the element 19 the baffle plates 23 extend into the semi-cylindrical shape of the element 19 and engage the inner cylindrical surface 19a of the element 19.

First and second barbed, resilient legs 24, 24a are formed integrally with the free edge region of the element 21 and snap-engage within corresponding apertures 25, 25a provided in the wall of the element 19 when the element 21 is hinged from the open position shown in Figures 2 and 3 to a closed position relative to the element 19. The latch arrangement 24, 25; 24a, 25a holds the element 21 in a closed position relative to the element 19, and the baffle plates 23 define with the elements 21 and 19, a labyrinthine path through the region 17 of the plug.

The upper aperture 25a is wider than its respective leg 24a so that a window 24b in the wall of the element 21 exists when the elements 19, 21 are latched together. The window 25b provides an inlet into the plug above the normal electrolyte level of the cell, through which gasses evolved in the cell can enter the baffle arrangement of the plug.

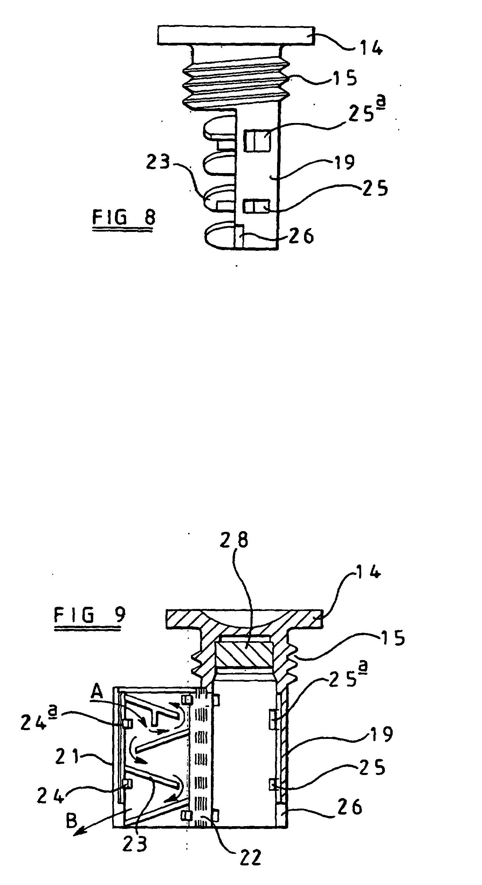

It will be recognised from the drawings that the baffle plates 23 are all inclined downwardly in use so that any electrolyte droplets entrained with the gas flow entering the baffle arrangement and coalescing on the baffle plates will form drops which will migrate under gravity along the baffle plates, dropping from one baffle plate to another (see arrow B in Figures 3 and 9), to be returned ultimately back into the cell from which the electrolyte is transported with the evolved gases. Alternate plates terminate short of opposite sides respectively of the cylindrical passage within which the plates are housed in order to define the labyrinthine path through the plug.

It can be seen that at their lower ends, remote from the region 16 of the plug, the elements 19, 21 are cut away at 26 to provide an outlet for electrolyte collected by the baffle arrangement to flow exit back into the cell. The cutouts 26 provide access to the space between the lowest, and the next adjacent baffle plate 23, although if desired the lowest baffle plate 23 could terminate, at its lowest end, short of the wall of the region 17. The upper baffle plate has a downwardly extending projection or flange 27 to obstruct the gas flow immediately downstream of the window 25b and on which the droplets carried with the gas flow will coalesce. Additionally the flange 27 will promote drip formation for electrolyte droplets coalescing on that baffle plate. Gas freed of electrolyte droplets will flow around the flange 27 and its baffle plate (see arrow A in Figures 3 and 9) to exit the plug ultimately by way of the apertures 18 to atmosphere.

The lower baffle plates prevent electrolyte being splashed or swirled up into the region 17 of the plug, particularly in conditions of extreme vibration or agitation, or when gas bubbles are evolved immediately below the plug. However it will be recognised that in low electrolyte level conditions gas with entrained droplets may enter the region 17 of the plug by way of the cutouts 26 so that the gas will follow the labyrinthine path around all of the baffle plates depositing the droplets on the plates in the process. Irrespective of the route by which gas enters the plug it will exit the plug to atmosphere by way of the apertures 18

It will be recognised that the interior of the region 16 of the plug defines a hollow cylindrical pocket closed at its upper end by the wall 16a with the exception of the perforations 18. If desired a separately formed porous flame retarder disc 28, which may be formed from synthetic resin material or ceramic material, can be introduced as a push fit within the cylindrical pocket so as to obstruct the downstream end of the gas flow path through the vent plug. The porous nature of the disc 28 permits gas to percolate through the disc and to exit the vent plug by way of the perforations 18, but will prevent flame being transferred back through the disc 28 and into the cell of the battery should the gases issuing from the perforations 18 to atmosphere be ignited. As can be seen in Figures 3 and 9 preferably a small chamber 29 is defined between the downstream face of the disc 28 and the underside of the wall 16a.

It will be noted that with the exception of the disc 28 the whole of the vent plug is moulded in one piece, and its assembly is simply a matter of hinging the element 21 to a closed position relative to the element 19 to produce a cylindrical component containing baffle plates defining a labyrinthine path.
In use gas evolved within the cell of the battery must flow between baffle plates 23 so that electrolyte droplets entrained with the gas flow will impinge upon the baffle plates and will coalesce and migrate down the plates to be returned to the electrolyte within the cell. Thus the gas issuing from the baffle arrangement is free of entrained liquid electrolyte and can pass through the flame arrester disc 28 and the chamber 29 to issue to atmosphere through the perforations 18.

It is desirable that the two longitudinal edges and the upper circumferential edge of the element 21 shall be a close fit against the corresponding edges of the element 19 and the region 16 when the element 21 is in its closed position, so that gas with entrained electrolyte will enter the plug through the window 25b. It will be recognised that one edge of each of the elements 19, 21 is inherently sealed by virtue of the integral web 22 which forms the hinge between the elements 19, 21.

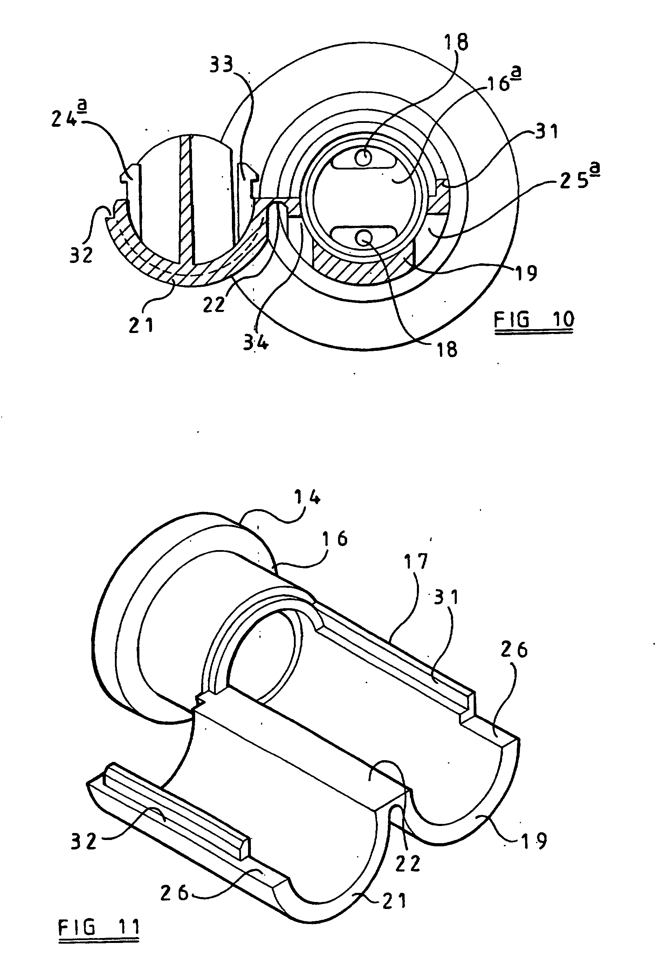

However, in order to enhance the sealing of the opposite longitudinal edge the free edge of the element 19 can be formed with an upstanding rib 31 which is received in a corresponding recess 32 along the free edge of the element 21 so as to form a lap-joint when the element 21 is moved to its closed position relative to the element 19. Furthermore, in addition to the resilient, barbed legs 24, 24a at the free edge of the element 21 engaging in corresponding apertures 25, 25a adjacent the free edge of the element 19, the element 21 can have, adjacent the hinge web 22 a further latch connection comprising one or more integral, resilient, barbed legs 33 which engage as a snap fit in one or more corresponding apertures 34 formed in the element 19. Figures 9 and 10 illustrate such an arrangement utilizing a spaced pair of additional legs 32 and apertures 33.

Figure 11 shows the interrelationship of the free edges of the elements 19 and 21 including the rib 31 and recess 32. It must be recognised however that the screw thread 15, the legs 24, 33, the corresponding apertures 25, 34, and the baffle plates 32 are omitted from Figure 11 for clarity.

## Claims

1. A vent plug, for use in an electric storage battery, comprising a generally cylindrical component (16) for introduction through the lid of a battery in use, the cylindrical component being open at its opposite axial ends so as to provide a path for gas to flow therethrough from the interior of the battery to atmosphere, and, a baffle arrangement (23) within said cylindrical component (16), the vent plug being **characterised in that** said cylindrical component (16) includes a region (17) moulded as two semi-cylindrical elements (19, 21) united along one axially extending edge by an integral flexible hinge (22), said elements (19, 21) including mating latch components (24, 25; 24a, 25a) for holding the elements in a closed position relative to one another defining said region (17) of said cylindrical component and, said baffle arrangement (23) being moulded integrally with said region (17) of said cylindrical component so as to define a labyrinthine gas flow path through said region when said elements (19, 21) are latched together to define said region.

2. A vent plug as claimed in claim 1 **characterised in that** said baffle arrangement (23) is defined by a plurality of inclined baffle plates moulded integrally with one (21) of said elements and engaging the inner surface of the other element (19) when the two elements are closed together.

3. A vent plug as claimed in claim 1 or claim 2 **characterised in that** said cylindrical component includes a region (16) into which a flame retarder disc (28) can be introduced prior to closing said elements (19, 21) to define said cylindrical region, said disc (28) lying in said gas flow path downstream of said baffle arrangement (23) in use.

4. A vent plug as claimed in any one of the preceding claims **characterised in that** the mating longitudinal edges of said elements (19, 21) remote from said hinge (22) are shaped (31, 32) to overlap in the closed position of said elements to provide a low-pressure gas tight seal.

5. A vent plug as claimed in any one of the preceding claims **characterised in that** said elements include latch components (24, 25; 24a, 25a; 33, 34) at their hinge edges and at their edges remote from the hinge so that both abutting edges of the two elements are latched in position when the two elements are closed against one another.

6. A vent plug as claimed in any one of the preceding claims **characterised in that** the end region (16) of said component which is the downstream end region of the component in use is moulded in one piece, and has an integral, external screw thread (15) for affixing the vent plug to the lid of the battery casing in use.

7. A vent plug as claimed in any one of the preceding claims **characterised in that** said mating latch components include an enlarged aperture (25a) providing a gas entry to said baffle arrangement in use.

8. A vent plug as claimed in any one of the preceding claims **characterised in that** one or both of said elements includes aperture means (26) above the lowermost edge of the lowermost baffle plate to permit coalesced electrolyte to drain back into the associated battery cell in use.

9. An electric storage battery wherein the or each cell of the battery is vented by way of a vent plug (11) as claimed in any one of the preceding claims.

## Patentansprüche

1. Entgasungsstopfen zur Verwendung in einer elektrischen Speicherbatterie, der eine allgemein zylindrische Komponente (16) zum Einführen durch den Deckel einer Batterie bei Anwendung, wobei die zylindrische Komponente an ihren gegenüberliegenden axialen Enden offen ist, um so eine Bahn bereitzustellen, damit Gas durch dieselbe vom Inneren der Batterie zur Atmosphäre strömt, und eine Ablenkplattenanordnung (23) innerhalb der zylindrischen Komponente (16) umfaßt, wobei der Entgasungsstopfen **dadurch gekennzeichnet ist, daß** die zylindrische Komponente (16) einen als zwei halbzylindrische Elemente (19, 21), die längs einer in Axialrichtung verlaufenden Kante durch ein integriertes flexibles Scharnier (22) verbunden werden, geformten Bereich (17) einschließt, wobei die Elemente (19, 21) zusammenpassende Klinkenelemente (24, 25; 24a, 25a) einschließen, um die Elemente in einer geschlossenen Position zueinander zu halten, die den Bereich (17) der zylindrischen Komponente definiert, und die Ablenkplattenanordnung (23) integriert mit dem Bereich (17) der zylindrischen Komponente geformt wird, um so eine labyrinthartige Gasströmungsbahn durch den Bereich zu definieren, wenn die Elemente (19, 21) zusammengeklinkt werden, um den Bereich zu definieren.

2. Entgasungsstopfen nach Anspruch 1, **dadurch gekennzeichnet, daß** die Ablenkplattenanordnung (23) durch eine Vielzahl von geneigten Ablenkplatten definiert wird, die integriert mit einem (21) der Elemente geformt werden und die Innenfläche des anderen Elements (19) in Eingriff nehmen, wenn die zwei Elemente aneinander verschlossen werden.

3. Entgasungsstopfen nach Anspruch 1 oder Anspruch 2, **dadurch gekennzeichnet, daß** die zylindrische Komponente einen Bereich (16) einschließt, in den vor dem Schließen der Elemente (19, 21), um den zylindrischen Bereich zu definieren, eine Flammschutzscheibe (28) eingeführt werden kann, wobei die Scheibe (28) bei Anwendung in der Gasströmungsbahn stromabwärts von der Ablenkplattenanordnung (23) liegt.

4. Entgasungsstopfen nach einem der vorhergehenden Ansprüche, **dadurch gekennzeichnet, daß** die von dem Scharnier (22) entfernten zusammenpassenden Längskanten der Elemente (19, 21) so geformt (31, 32) werden, daß sie einander in der geschlossenen Position der Elemente überlappen, um eine gasdichte Niederdruckdichtung bereitzustellen.

5. Entgasungsstopfen nach einem der vorhergehenden Ansprüche, **dadurch gekennzeichnet, daß** die Elemente Klinkenkomponenten (24, 25; 24a, 25a; 33, 34) an ihren Scharnierkanten und an ihren von dem Scharnier entfernten Kanten einschließen, so daß beide aneinanderstoßende Kanten der zwei Elemente in ihrer Position eingeklinkt werden, wenn die zwei Elemente aneinander verschlossen werden.

6. Entgasungsstopfen nach einem der vorhergehenden Ansprüche, **dadurch gekennzeichnet, daß** der Endbereich (16) der Komponente, der bei Anwendung der stromabwärts gelegene Endbereich der Komponente ist, in einem Stück geformt wird und ein integriertes Außenschraubgewinde (15) hat, um den Entgasungsstopfen bei Anwendung am Deckel des Batteriegehäuses zu befestigen.

7. Entgasungsstopfen nach einem der vorhergehenden Ansprüche, **dadurch gekennzeichnet, daß** die zusammenpassenden Klinkenkomponenten eine erweiterte Öffnung (25a) einschließen, die bei Anwendung einen Gaseintritt zu der Ablenkplattenanordnung gewährleistet.

8. Entgasungsstopfen nach einem der vorhergehenden Ansprüche, **dadurch gekennzeichnet, daß** eines oder beide der Elemente oberhalb der untersten Kante der untersten Ablenkplatte Öffnungsmittel (26) einschließt/einschließen, um zu ermöglichen, daß zusammengeflossenes Elektrolyt bei Anwendung zurück in die zugeordnete Batteriezelle abläuft.

9. Elektrische Speicherbatterie, bei der die oder jede Zelle der Batterie mit Hilfe eines Entgasungsstopfens (11) nach einem der vorhergehenden Ansprüche entgast wird.

## Revendications

1. Bouchon à évent, pour utilisation dans une batterie d'accumulateurs électriques, comprenant un composant généralement cylindrique (16) destiné à être introduit à travers le couvercle d'une batterie en service, le composant cylindrique étant ouvert à ses extrémités axiales opposées de manière à fournir une trajectoire à travers laquelle le gaz s'écoule à partir de l'intérieur de la batterie vers l'atmosphère, et, un agencement déflecteur (23) à l'intérieur dudit composant cylindrique (16), le bouchon à évent étant **caractérisé en ce que** ledit composant cylindrique (16) comprend une région (17) moulée sous la forme de deux éléments semi cylindriques (19, 21) unifiés le long d'un bord s'étendant axialement par une charnière flexible d'un seul tenant (22), lesdits éléments (19, 21) comprenant des composants de verrouillage qui s'accouplent (24, 25; 24a, 25a) pour maintenir les éléments dans une position fermée l'un par rapport à l'autre en définissant ladite région (17) dudit composant cylindrique et, ledit agencement déflecteur (23) étant moulé d'un seul tenant avec ladite région (17) dudit composant cylindrique de manière à définir une trajectoire d'écoulement de gaz en labyrinthe à travers ladite région lorsque lesdits éléments (19, 21) sont verrouillés ensemble pour définir ladite région.

2. Bouchon à évent comme revendiqué dans la revendication 1 **caractérisé en ce que** ledit agencement déflecteur (23) est défini par une pluralité de plaques déflectrices inclinées moulées d'un seul tenant avec un (21) desdits éléments et venant au contact de la surface intérieure de l'autre élément (19) lorsque les deux éléments se ferment ensemble.

3. Bouchon à évent comme revendiqué dans la revendication 1 ou dans la revendication 2 **caractérisé en ce que** ledit composant cylindrique comprend une région (16) dans laquelle un disque retardateur de flamme (28) peut être introduit avant la fermeture desdits éléments (19, 21) pour définir ladite région cylindrique, ledit disque (28) reposant dans ladite trajectoire d'écoulement de gaz en aval dudit agencement déflecteur (23) en service.

4. Bouchon à évent comme revendiqué dans une quelconque des revendications précédentes **caractérisé en ce que** les bords longitudinaux d'accouplement desdits éléments (19, 21) éloignés de ladite charnière (22) sont façonnés (31, 32) pour se chevaucher dans la position fermée desdits éléments pour réaliser un joint hermétique au gaz à basse pression.

5. Bouchon à évent comme revendiqué dans une quelconque des revendications précédentes **caractérisé en ce que** lesdits éléments comprennent des composants de verrouillage (24, 25; 24a, 25a; 33, 34) sur leurs bords de charnière et sur leurs bords éloignés de la charnière de sorte que les deux bords d'appui des deux éléments soient verrouillés en position lorsque les deux éléments se ferment l'un contre l'autre.

6. Bouchon à évent comme revendiqué dans une quelconque des revendications précédentes **caractérisé en ce que** la région d'extrémité (16) dudit composant qui est la région d'extrémité avale du composant en service est moulée en une pièce, et possède un filetage de vis externe d'un seul tenant (15) pour fixer le bouchon à évent sur le couvercle du boîtier de batterie en service.

7. Bouchon à évent comme revendiqué dans une quelconque des revendications précédentes **caractérisé en ce que** lesdits composants de verrouillage qui s'accouplent comprennent une ouverture élargie (25a) formant une entrée de gaz vers ledit agencement déflecteur en service.

8. Bouchon à évent comme revendiqué dans une quelconque des revendications précédentes **caractérisé en ce que** un ou une paire desdits éléments comprend un moyen d'ouverture (26) au-dessus du bord le plus bas de la plaque déflectrice la plus basse pour permettre de drainer l'électrolyte coalescé à nouveau dans la pile de la batterie associée en service.

9. Batterie d'accumulateurs électriques dans laquelle la ou chaque pile de la batterie est éventée au moyen d'un bouchon à évent (11) comme revendiqué dans une quelconque des revendications précédentes.
